# EUROPEAN PATENT SPECIFICATION

(11) **EP 3 677 981 B1**
(45) Date of publication and mention of the grant of the patent: **23.08.2023**
(21) Application number: 19213141.5
(22) Date of filing: 03.12.2019
(51) Int. Cl.: G05D 7/01

(54) **DIFFERENTIAL PRESSURE VALVE ARRANGEMENT**
DIFFERENZDRUCKVENTILANORDNUNG
AGENCEMENT DE SOUPAPE DE PRESSION DIFFÉRENTIELLE

(30) Priority: 07.01.2019 DK PA201900015
(43) Date of publication of application: 08.07.2020
(73) Proprietor: Danfoss A/S, 6430 Nordborg (DK)
(72) Inventor: NOSE, Peter, 6430 Nordborg (DK); ZAGAR, Tomaz, 6430 Nordborg (DK); REBERNIK, Jure, 6430 Nordborg (DK)
(74) Representative: Stevens, Brian

(56) References cited:
- EP-A1- 2 848 846
- WO-A1-2009/006893
- CN-Y- 2 418 328
- US-A1- 2006 254 655
- US-A1- 2012 241 029

## Description

### BACKGROUND

The invention relates to a valve arrangement, especially such as a heat exchanger valve arrangement, according to the preamble of claim 1.

Such a valve is known, for example, from WO2009006893A1, CN 2418328 Y, or EP 2 848 846 A1

In heating systems, the flow rates can be controlled by flow controllers, such as valves, where these may be pressure independent valves improving the efficiency of the system.

The operation of such valves may however be affected by various reasons, such as that debris etc. in the working fluid having settled on the shutting element, or valve element, adapted to respond to pressure changes. This would lead both to a reduced efficiency, but also to an unpredictable valve where the actual operation does not match the expectations, possible where it will be limited in its range of operation.

The present invention aims to prevent the shutting element from being limited in its stroking range due to e.g. the outer surface wall being calcified., by scaling etc. The present invention is especially relevant for such pressure control valves where the shutting element is cup-shaped.

### SUMMARY OF THE INVENTION

The aim of the present invention is solved by the features as indicated in the claim 1. This includes introducing a pressure control valve comprising: a shutter arranged in a valve chamber positioned between at least one fluid inlet and at least one fluid outlet, said shutter adapted to move relative to a valve seat defining a first opening degree of the pressure control valve;
a diaphragm connected with the shutter, that deflects under changes in differential pressure over the diaphragm, thereby changing the position of the shutter with respect to the pressure responsive valve seat; where a shutter guide within the valve chamber comprises a plural of contacting parts to the outer wall of the shutter positioned at its circumference.

In an embodiment the contacting parts are formed as beams extending in the length direction relative to the movement of the shutter such that a contact is formed over its whole movement under the deflection of the diaphragm.

In the invention the contacting parts comprise a pointed outer surface forming the contacts to the shutter.

In an embodiment the pointed outer surfaces comprise two sloping sides pointing towards each other seen in a cross section of said contact parts.

In an embodiment the two sloping sides meets in a sharp edge, a rounded edge or a blunt edge.

In an embodiment the two sloping sides are arranged with about a 90 degrees angle, or a 120 degrees angle, or a 150 degrees angle relative to each other.

In an embodiment the contact parts are formed as an integral part of the wall of the valve chamber.

In an embodiment the contact parts are formed as an integral part of a shutter guide insert (200) fixed within the valve chamber.

In the invention the shutter comprises a wall enclosing a chamber being open to the fluids in a first end, the first valve opening defined by the distance between said first end and said valve seat, at the second end the walls connect to an end face connected to said diaphragm, wherein the outside surface of said wall contacts said contacting parts.

In an embodiment said wall comprises a projection at the circumference of said wall forming the contact to said contacting parts.

In an embodiment said wall comprises at least two projections at the circumference of said wall, each forming the contact to each of said contacting parts.

In an embodiment the extension of the projection(s) in the direction of the shutter movement ensures with the contacting parts over the whole extension

In an embodiment said wall encloses a chamber accommodating a biasing element being configured to bias the shutter in a direction away from the valve seat.

### FIGURES

- Fig. 1: is a schematic illustration of the pressure control valve.
- Fig. 2A, B: Side view and top view of the shutter in connection with the shutter guide according to a first embodiment.
- Fig. 3A-D: Close-up of the contacting parts pointed outer surfaces according to different embodiments
- Fig. 4A, B: Different embodiments of the outer surface wall of the shutter with respectively one and two projections
- Fig.5A, B: Embodiment where the shutter guide is formed in relation to the outer surface wall of the shutter.

### DETAILED DESCRIPTION OF THE INVENTION

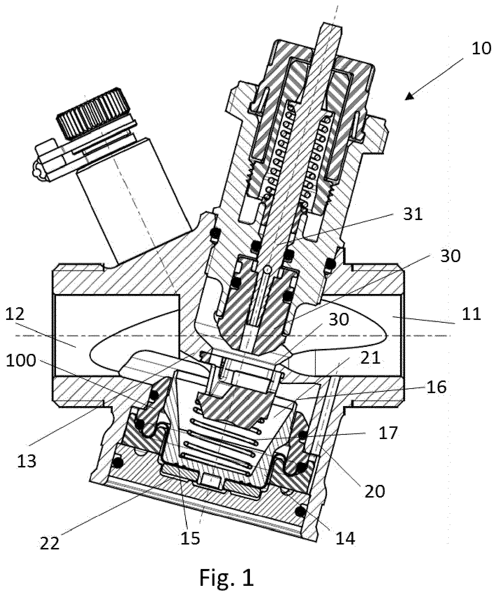

Fig. 1 shows schematically a pressure control valve (10) comprising: a shutter (14), or valve element, arranged in a valve chamber (16) that is positioned between at least one fluid inlet (11) and at least one fluid outlet (12). The shutter (14) is adapted to move relative to a valve seat (13) defining a first opening degree of the pressure control valve (10) based on the distance between the two parts. The fluid thus passes from the inlet (11) to the outlet (12) passing the pressure control valve (10) at a flow rate regulated by the valve opening formed between the valve seat (13) and shutter (14) in the usual manner.

In the illustration an optional further flow control valve is positioned between said inlet (11) and outlet (12) formed of a flow control valve element (30) cooperating with a second valve seat (32) and connected at a first end of a valve pin (31) of which a second end optionally connected to an actuator.

The shutter (14) is fixed to a diaphragm (15) that at a first side is in pressure contact to a first pressure chamber (21) exposing it to a first pressure, and a second side being exposed to a second pressure by being in contact to a second pressure chamber (22), such that variations in a pressure difference between the first pressure and the second pressure induces a deflection of the diaphragm (15), thereby changing the position of the shutter (14) with respect to the pressure responsive valve seat (13). The second pressure chamber (22) may be in contact to either the inlet (11) side or outlet (22) side by a pressure conduit (20), whereby the deflection of the shutter (14) adapts the flow rate to maintain a pressure equalization over the flow control valve. In the illustrated embodiment, the third pressure at the outlet side will be in contact to the wall (300) of the shutter (14) and the diaphragm (15) section formed outside where it contacts the shutter (14), and its contribution thus will be with equal force on both directions, thus cancelling each outer since the pressure area of the two opposing sides of the diaphragm (15) are formed to be equal.

The shutter is cup-shaped. It comprises a wall (300) enclosing a chamber (301) being open to the fluids in a first end (302). The chamber (301) thus could form the first pressure chamber (21) and is in contact to the fluid flow passing through the pressure control valve (10), such as also to the outlet side of the flow control valve, or in the reverse embodiment to the inlet side of the flow control valve.

In an embodiment the chamber (301) accommodate a biasing element (16) being configured to bias the shutter (14) in a direction away from the valve seat (13).

The first valve opening defined by the distance between said first end (302) of the wall (300) and said valve seat (13).

At the second end the wall (300) connects to an end-face (303) that further is connected to the diaphragm (15), such that the outer side of the end-face will be in pressure communication to the second pressure chamber (22).

To direct the shutter (14) under the deflection of the diaphragm (15) such that it follows an essentially straight line without being deflected under the influence of the fluid flow through the valve (10), the outer surface of the wall (300) contacts a shutter guide (100).

In one embodiment the shutter guide (100) is formed as an integral part of the wall of the valve chamber (16).

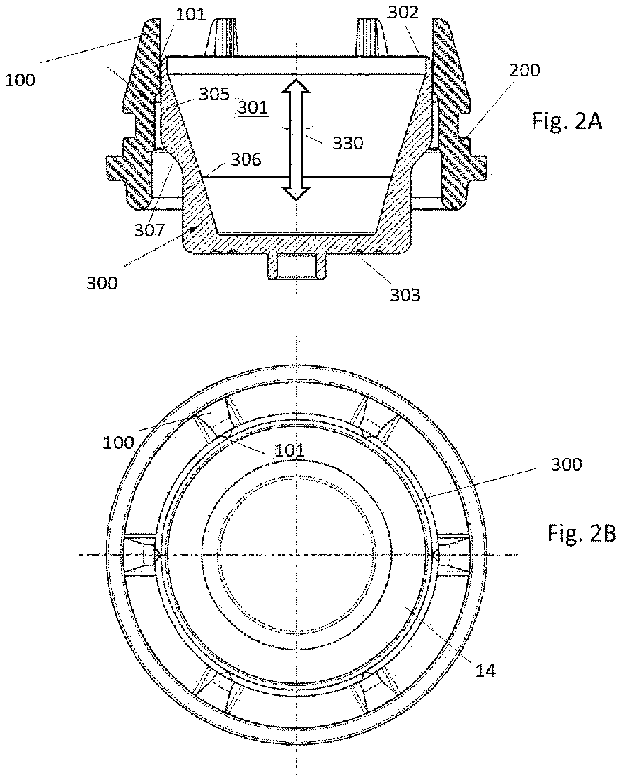

In another embodiment the shutter guide (100) is formed as an integral part of a shutter guide insert (200) fixed within the valve chamber, such as e.g. seen in fig. 2A. Though the drawings in general show it as a shutter guide insert (200), any of these embodiments would also apply to the shutter guide (100) being an integral part of the wall of the valve chamber (16)

Fig. 2A is a side view of the shutter (14) in contact with the contacting parts (101) of the shutter guide (100) and fig. 2B is a top view of the same showing the shutter guide (100) having 6 parts encircling the shutter (14) and each comprising contact parts (101) contacting the shutters (14) outer wall (300). Though the illustration discloses 6 parts of the shutter guide (100), this is only for illustration and any number that would ensure a stable movement (330) of the shutter (14) would apply to the present invention.

The shutter guide (100) may be formed as 'beams' extending in the direction of the shutter movement (330) having a length that ensures contact over the whole movement assisting in keeping the movement

The contacting parts (101) have a relatively small contacting surface area to the wall (300) to reduce friction on the movement. Another advantage is that the shaping of the contacting parts (101) has been found to prevent problems when there come settlements on the outer surface wall (300) of the shutter (14), such as the surface calcifying. Since the shutter (14) during operation may stay within a narrow movement for minor fluctuations in the differential pressure experienced over the diaphragm (15), the settlements may be such that it prevents larger movements once higher differential pressures occur, thus preventing the shutter (15) from the pressure equalization.

The embodiment of fig. 2A shows the shutter (15) formed with a first external diameter (305) being wider than a second external diameter (306) with a transition zone (307) therebetween. The contacting parts (101) are arranged such that they only contact the first external diameter (305) section.

In one embodiment, such as the one illustrated in fig. 2A, the contact of the contacting parts (101) are arranged such on the wall (300) that when the differential pressure increases the contacting parts (101) will scrape off the settlements, such as scaling, elements calcified etc.

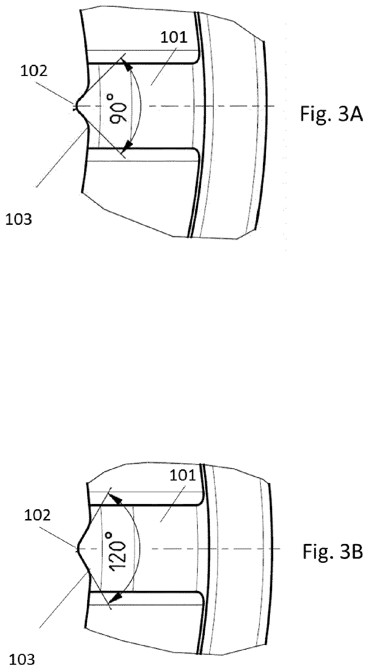

Figs. 3A-3D shows three different embodiments of this shaping of the contacting parts (101) such that they are formed to comprise a pointed outer surface (102) forming the contacts to the shutter (14), and wherein the pointed outer surfaces (102) comprise two sloping sides (103) pointing towards each other seen in a cross section of said contact parts (101).

In figure 3A an embodiment is shown where the two sloping sides (103) pointing towards each other with an angle of roughly 90 degrees. The two sloping sides (103) in the illustration meets in a rounded edge. Alternatively, it could be a sharp or blunt edge.

In figure 3B an embodiment is shown where the two sloping sides (103) pointing towards each other with an angle of roughly 120 degrees. The two sloping sides (103) in the illustration meets in a rounded edge. Alternatively, it could be a sharp or blunt edge.

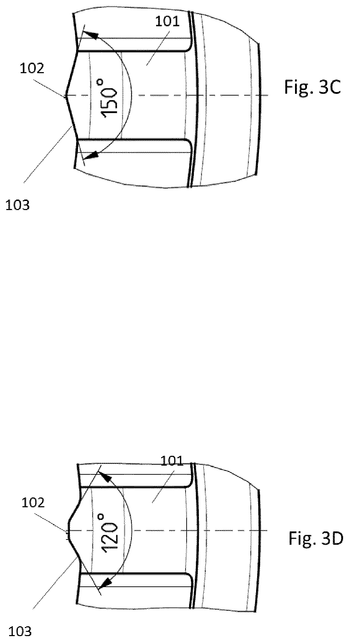

In figure 3C an embodiment is shown where the two sloping sides (103) pointing towards each other with an angle of roughly 150 degrees. The two sloping sides (103) in the illustration meets in a sharp edge. Alternatively, it could be a rounded or blunt edge.

In figure 3D an embodiment is shown where the two sloping sides (103) pointing towards each other with an angle of roughly 120 degrees. The two sloping sides (103) in the illustration meets in a blunt edge. Alternatively, it could be a sharp.

Any of the sharp, rounded or blunt edge embodiments could apply to any of the angles of the two sloping slides (103) relative to each other, just as these could have any angle between 40 and 180 degrees.

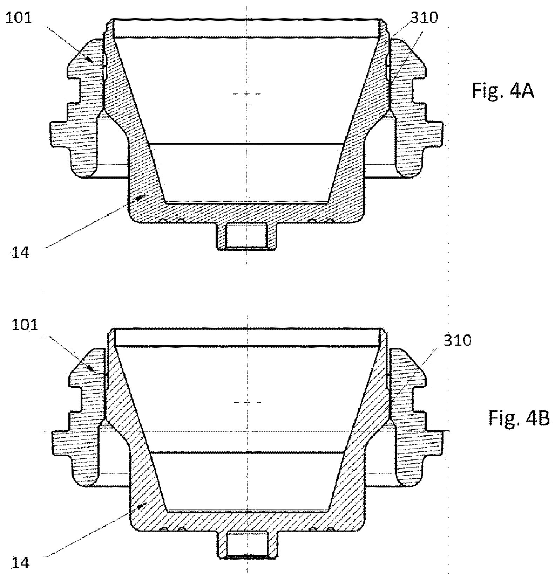

Figs. 4A and 4B shows embodiments of the shutter (14) that would apply to any of the embodiments as previously disclosed, where the outer surface wall (300) comprises a projection (310) at the circumference of said wall (300) forming the contact to said contacting parts (101), where two such projections (310) are shown in fig. 4A and one in fig. 4B. This has shown to improve the operation even further as it reduces the contact area of the contracting parts (101) to the outer wall surface (300).

Looking e.g. at the embodiment of fig, 4B, then in one version the extension of the projection (310) in the direction of the shutter movement (330) is such that it is in contact with the contacting parts (101) over the whole extension. This ensures these areas of the outer wall surface (300) never is exposed for scaling, settlements, or to calcify etc. Thereby free tracks are ensured for the movement without obstacles when the outer surface wall (300) slides along the contacting parts (101). This version naturally could be extended to there being a plural of such projections (310).

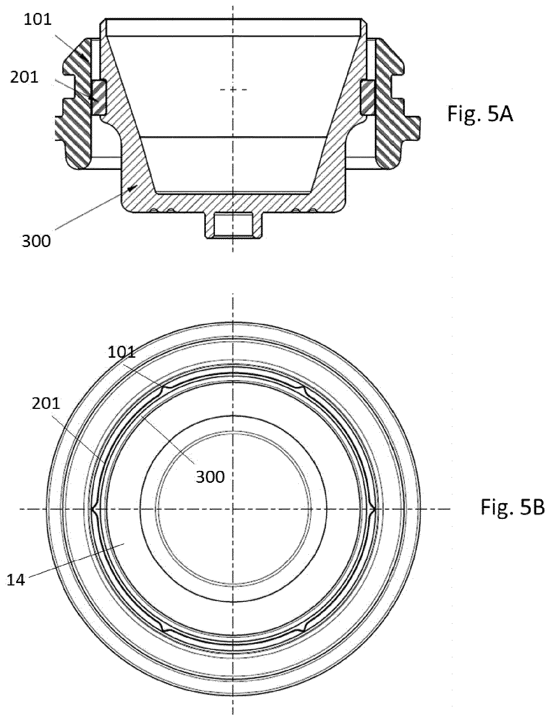

In alternative embodiments, rather than forming the shutter guides (100) and contacting parts (101) in relation to the inner wall of the valve chamber (16), they could be formed in relation to the outer surface wall (300) of the shutter (14) contacting the inner surface wall of the valve chamber (16). This could be e.g. simply forming the contact parts (101) as pointed outer surfaces (102) projecting from the wall (300), or, as seen figs. 5A and 5B, as an inserting element (201) fixed to the outer surface wall (300), such as in a recess.

## Claims

1. A pressure control valve (10) comprising: a shutter (14) arranged in a valve chamber (16) positioned between at least one fluid inlet (11) and at least one fluid outlet (12), said shutter (14) adapted to move relative to a valve seat (13) defining a first opening degree of the pressure control valve (10);
where the shutter (14) is fixed to a diaphragm (15) that at a first side is in pressure contact to a first pressure chamber (21) exposing it to a first pressure, and a second side being exposed to a second pressure by being in contact to a second pressure chamber (22), where the diaphragm (15) deflects under changes in differential pressure over the diaphragm (15), thereby changing the position of the shutter (14) with respect to the pressure responsive valve seat (13);
wherein the shutter (14) is cup-shaped and comprises a wall (300) enclosing a chamber (301) being open to the fluids in a first end (302) and forming the first pressure chamber (21), **characterized in that**
a shutter guide (100) within the valve chamber (16) comprises a plural of contacting parts (101) encircling the wall (300) of the shutter (14) positioned at its circumference, wherein the contacting parts (101) comprise a pointed outer surface (102) contacting the outside surface of the wall (300) of the shutter (14).

2. A pressure control valve (10) according to claim 1, wherein the contacting parts (101) are formed as beams extending in the length direction relative to the movement of the shutter (14) such that a contact is formed over its whole movement under the deflection of the diaphragm (15).

3. A pressure control valve (10) according to claim 1 or 2, wherein the pointed outer surfaces (102) comprise two sloping sides (103) pointing towards each other seen in a cross section of said contact parts (101).

4. A pressure control valve (10) according to claim 3, wherein the two sloping sides (103) meets in a sharp edge, a rounded edge or a blunt edge.

5. A pressure control valve (10) according to claim 4, wherein the two sloping sides (103) are arranged with about a 90 degrees angle, or a 120 degrees angle, or a 150 degrees angle relative to each other.

6. A pressure control valve (10) according to any of claims 1-5, wherein the contact parts (101) are formed as an integral part of the wall of the valve chamber (16).

7. A pressure control valve (10) according to any of claims1-5, wherein the contact parts (101) are formed as an integral part of a shutter guide insert (200) fixed within the valve chamber.

8. A pressure control valve (10) according to any of the previous claims, wherein the first valve opening is defined by the distance between said first end (302) and said valve seat (13), at the second end the walls (300) connects to an end face (303) connected to said diaphragm (15), wherein the outside surface of said wall (300) contacts said contacting parts (101).

9. A pressure control valve (10) according to claim 8, wherein said wall (300) comprises a projection (310) at the circumference of said wall (300) forming the contact to said contacting parts (101).

10. A pressure control valve (10) according to claim 8 or 9, wherein said wall (300) comprises at least two projections (310) at the circumference of said wall (300), each forming the contact to each of said contacting parts (101).

11. A pressure control valve (10) according to one of claims 9 or 10, wherein the extension of the projection(s) (310) in the direction of the shutter movement (330) is such that they are in contact with the contacting parts (101) over the whole extension.

12. A pressure control valve (10) according to any of the claims 8-11, wherein said wall (300) encloses said chamber (301) accommodating a biasing element (16) being configured to bias the shutter (14) in a direction away from the valve seat (13).

## Patentansprüche

1. Druckregelventil (10), Folgendes umfassend: einen Verschluss (14), der in einer Ventilkammer (16) angeordnet ist, die zwischen mindestens einem Fluideinlass (11) und mindestens einem Fluidauslass (12) positioniert ist, wobei der Verschluss (14) dazu eingerichtet ist, sich in Bezug zu einem Ventilsitz (13) zu bewegen und einen ersten Öffnungsgrad des Druckregelventils (10) zu definieren; wobei der Verschluss (14) an einer Membran (15) fixiert ist, die auf einer ersten Seite mit einer ersten Druckkammer (21) in Druckkontakt steht und dadurch einem ersten Druck ausgesetzt ist, und eine zweite Seite durch den Kontakt mit einer zweiten Druckkammer (22) einem zweiten Druck ausgesetzt ist, wobei sich die Membran (15) bei Veränderungen des Differenzdrucks über die Membran (15) ablenkt, wodurch die Position des Verschlusses (14) in Bezug zum druckempfindlichen Ventilsitz (13) verändert wird;
wobei der Verschluss (14) topfförmig ist und eine Wand (300) umfasst, die eine Kammer (301) umschließt, die an einem ersten Ende (302) zu den Fluiden offen ist und die erste Druckkammer (21) ausbildet,
**dadurch gekennzeichnet, dass** eine Verschlussführung (100) innerhalb der Ventilkammer (16) mehrere Berührungsteile (101) umfasst, die die Wand (300) des Verschlusses (14) an dessen Umfang positioniert umgeben, wobei die Berührungsteile (101) eine zugespitzte Außenfläche (102) umfassen, die die Außenfläche der Wand (300) des Verschlusses (14) berührt.

2. Druckregelventil (10) nach Anspruch 1, wobei die Berührungsteile (101) als Balken ausgebildet sind, die sich in Bezug zur Bewegung des Verschlusses (14) in Längsrichtung erstrecken, sodass über die gesamte Bewegung unter der Ablenkung der Membran (15) ein Kontakt ausgebildet wird.

3. Druckregelventil (10) nach Anspruch 1 oder 2, wobei die zugespitzten Außenflächen (102) zwei schräge Seiten (103) umfassen, die, im Querschnitt der Berührungsteile (101) betrachtet, aufeinander zeigen.

4. Druckregelventil (10) nach Anspruch 3, wobei die zwei schrägen Seiten (103) in einer scharfen Kante, einer abgerundeten Kante oder einer stumpfen Kante aufeinandertreffen.

5. Druckregelventil (10) nach Anspruch 4, wobei die zwei schrägen Seiten (103) in etwa in einem 90-Grad-Winkel oder einen 120-Grad-Winkel oder einen 150-Grad-Winkel zueinander angeordnet sind.

6. Druckregelventil (10) nach einem der Ansprüche 1-5, wobei die Berührungsteile (101) als integraler Teil der Wand der Ventilkammer (16) ausgebildet sind.

7. Druckregelventil (10) nach einem der Ansprüche 1-5, wobei die Berührungsteile (101) als integraler Teil eines in der Ventilkammer fixierten Verschlussführungseinsatzes (200) ausgebildet sind.

8. Druckregelventil (10) nach einem der vorstehenden Ansprüche, wobei die erste Ventilöffnung durch die Entfernung zwischen dem ersten Ende (302) und dem Ventilsitz (13) definiert ist, am zweiten Ende die Wand (300) mit einer Endfläche (303) verbunden ist, die mit der Membran (15) verbunden ist, wobei die Außenfläche der Wand (300) die Berührungsteile (101) berührt.

9. Druckregelventil (10) nach Anspruch 8, wobei die Wand (300) einen Vorsprung (310) am Umfang der Wand (300) umfasst, der den Kontakt mit den Berührungsteilen (101) ausbildet.

10. Druckregelventil (10) nach Anspruch 8 oder 9, wobei die Wand (300) mindestens zwei Vorsprünge (310) am Umfang der Wand (300) umfasst, die jeweils den Kontakt mit jedem der Berührungsteile (101) ausbilden.

11. Druckregelventil (10) nach einem der Ansprüche 9 oder 10, wobei die Ausdehnung des Vorsprungs/der Vorsprünge (310) in Richtung der Verschlussbewegung (330) derart ist, dass sie die Berührungsteile (101) über die gesamte Ausdehnung berühren.

12. Druckregelventil (10) nach einem der Ansprüche 8-11, wobei die Wand (300) die Kammer (301) umschließt, die ein Vorspannungselement (16) aufnimmt, das dazu ausgelegt ist, den Verschluss (14) in eine Richtung vom Ventilsitz (13) weg vorzuspannen.

## Revendications

1. Soupape de commande de pression (10) comprenant : un obturateur (14) agencé dans une chambre de soupape (16) positionnée entre au moins une entrée de fluide (11) et au moins une sortie de fluide (12), ledit obturateur (14) étant adapté pour se déplacer relativement à un siège de soupape (13) définissant un premier degré d'ouverture de la soupape de commande de pression (10) ;
où l'obturateur (14) est fixé à un diaphragme (15) qui, sur un premier côté, est en contact de pression avec une première chambre de pression (21), l'exposant à une première pression, et un second côté exposé à une seconde pression en étant en contact avec une seconde chambre de pression (22), où le diaphragme (15) se défléchit selon des changements de pression différentielle sur le diaphragme (15), ainsi changeant la position de l'obturateur (14) par rapport au siège de soupape (13) réactif à la pression,
dans laquelle l'obturateur (14) est sous forme de coupelle et comprend une paroi (300) entourant une chambre (301) ouverte aux fluides dans une première extrémité (302) et formant la première chambre de pression (21), **caractérisée en ce que**
un guide d'obturateur (100) à l'intérieur de la chambre de soupape (16) comprend une pluralité de parties de contact (101) encerclant la paroi extérieure (300) de l'obturateur (14), positionnées à sa circonférence, dans laquelle les parties de contact (101) comprennent une surface extérieure pointue (102) entrant en contact avec la surface extérieure de la paroi (300) de l'obturateur (14).

2. Soupape de commande de pression (10) selon la revendication 1, dans laquelle les parties de contact (101) sont sous forme de barres s'étendant dans le sens de la longueur relativement au mouvement de l'obturateur (14) de telle sorte qu'un contact soit formé durant son mouvement entier sous la déflexion du diaphragme (15).

3. Soupape de commande de pression (10) selon la revendication 1 ou 2, dans laquelle les surfaces extérieures pointues (102) comprennent deux côtés en pente (103) tournés l'un vers l'autre en vue en coupe transversale desdites parties de contact (101).

4. Soupape de commande de pression (10) selon la revendication 3, dans laquelle les deux côtés en pente (103) se rencontrent en un bord pointu, un bord arrondi ou un bord émoussé.

5. Soupape de commande de pression (10) selon la revendication 4, dans laquelle les deux côtés en pente (103) sont agencés avec environ un angle de 90 degrés, ou un angle de 120 degrés, ou un angle de 150 degrés l'un relativement à l'autre.

6. Soupape de commande de pression (10) selon l'une quelconque des revendications 1 à 5, dans laquelle les parties de contact (101) sont sous forme de partie intégrante de la paroi de la chambre de soupape (16).

7. Soupape de commande de pression (10) selon l'une quelconque des revendications 1 à 5, dans laquelle les parties de contact (101) sont sous forme de partie intégrante d'une pièce d'insertion de guide d'obturateur (200) fixée à l'intérieur de la chambre de soupape.

8. Soupape de commande de pression (10) selon l'une quelconque des revendications précédentes, dans laquelle la première ouverture de soupape est définie par la distance entre ladite première extrémité (302) et ledit siège de soupape (13), à la seconde extrémité les parois (300) se relient à une face d'extrémité (303) reliée audit diaphragme (15), dans laquelle la surface extérieure de ladite paroi (300) entre en contact avec lesdites parties de contact (101).

9. Soupape de commande de pression (10) selon la revendication 8, dans laquelle ladite paroi (300) comprend une saillie (310) à la circonférence de ladite paroi (300) formant le contact avec lesdites parties de contact (101).

10. Soupape de commande de pression (10) selon la revendication 8 ou 9, dans laquelle ladite paroi (300) comprend au moins deux saillies (310) à la circonférence de ladite paroi (300), chacune formant le contact avec chacune desdites parties de contact (101).

11. Soupape de commande de pression (10) selon l'une des revendications 9 ou 10, dans laquelle l'extension de la ou des saillie(s) (310) dans le sens du mouvement d'obturateur (330) est de telle sorte qu'elles soient en contact avec les parties de contact (101) sur l'extension entière.

12. Soupape de commande de pression (10) selon l'une quelconque des revendications 8 à 11, dans laquelle ladite paroi (300) entoure ladite chambre (301) logeant un élément de sollicitation (16) configuré pour solliciter l'obturateur (14) dans un sens à l'opposé du siège de soupape (13).
